(19) Europäisches Patentamt
European Patent Office
Office européen des brevets

(11) EP 1 394 962 B1

(12) # FASCICULE DE BREVET EUROPEEN

(45) Date de publication et mention de la délivrance du brevet:
**01.12.2010 Bulletin 2010/48**

(51) Int Cl.:
***H04B 7/005*** *(2006.01)*

(21) Numéro de dépôt: **03292014.2**

(22) Date de dépôt: **11.08.2003**

(54) **Procédé d'émission de signaux radio en diversité de polarisation et station de radiocommunication associée**

Verfahren zur Übertragung von Funksignalen mit Polarisationsdiversität und entsprechende Funkkommunikationsstation

Method for transmission of radio signals with polarization diversity and corresponding radiocommunication station

(84) Etats contractants désignés:
**DE FR GB**

(30) Priorité: **27.08.2002 FR 0210613**

(43) Date de publication de la demande:
**03.03.2004 Bulletin 2004/10**

(60) Demande divisionnaire:
**10181863.1**

(73) Titulaire: **Nortel Networks Limited**
**St Laurent, Québec H4S 2A9 (CA)**

(72) Inventeurs:
- **Lucidarme, Thierry**
**78180 Montigny-Le-Bretonneux (FR)**
- **Ben Rached, Nidham**
**75017 Paris (FR)**

(74) Mandataire: **Bird, William Edward et al**
**Bird Goën & Co**
**Klein Dalenstraat 42A**
**3020 Winksele (BE)**

(56) Documents cités:
**WO-A-01/54230**
**WO-A-01/86823**
**WO-A-02/103928**
**US-A- 5 570 349**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne le domaine des radio-communications. Elle trouve notamment application dans les systèmes de radio-communication à diversité de polarisation.

Traditionnellement, les systèmes de radio-communication avec des mobiles utilisent des techniques de traitement en diversité qui permettent d'améliorer leurs performances. Le traitement en diversité repose sur la combinaison de l'information reçue à partir de plusieurs signaux transmis d'une source vers un destinataire. La diversité peut être introduite sur divers paramètres, comme le temps, l'espace, la fréquence ou la polarisation d'une onde électromagnétique, ce qui donne lieu à de multiples techniques.

Différentes méthodes de diversité d'émission sont par exemple actuellement prévues dans les réseaux cellulaires de troisième génération de type UMTS ("Universal Mobile Télécommunications System") dans le sens descendant (du réseau vers les mobiles). Une première catégorie de méthodes, dites méthodes de diversité d'émission en boucle ouverte mettent en oeuvre les schémas STTD ("Space Time Transmit Diversity") ou TSTD ("Time Switch Transmit Diversity").

Le schéma de diversité STTD repose sur un codage espace-temps. Selon ce schéma, deux signaux $s_0$ et $s_1$ sont simultanément transmis à un instant t et sur une période T d'un temps symbole sur deux antennes 0 et 1, respectivement. A l'instant t + T, les signaux - $s_1$* et $s_0$* sont simultanément transmis sur une période T sur les antennes 0 et 1, respectivement (le symbole "*" désignant l'opération de conjugaison complexe). Il permet ainsi, sur un système à deux antennes en émission et une antenne en réception, d'obtenir le même ordre de diversité que sur un système à une antenne en émission, deux antennes en réception dont les signaux sont traités par un récepteur à diversité utilisant la méthode de combinaison optimale ("Maximal Ratio Combining", MRC).

Le schéma STTD tel qu'appliqué dans les réseaux de type UMTS est décrit au paragraphe 5.3.1.1.1 de la spécification technique 3G TS 25.211, "Physical channels and mapping of transport channels onto physical channels (FDD)", version 3.9.0 publiée en décembre 2001 par le 3GPP ("3rd Generation Partnership Project").

La diversité d'émission en boucle fermée est aussi mise en oeuvre dans ces réseaux de troisième génération. Une description détaillée en est donnée au paragraphe 7 de la spécification technique 3G TS 25.214, "Physical layer procédures (FDD) - Release 1999", version 3.9.0 , publiée en décembre 2001 par le 3GPP.

Selon ce schéma, un signal est émis à partir de deux antennes, après avoir été pondéré sur chaque branche d'émission par un poids destiné à corriger sa phase et/ou son amplitude afin de maximiser la puissance du signal utile reçue par le récepteur. Une boucle de rétroaction permet la mise à jour à l'émetteur du vecteur de poids optimal. Un tel schéma est potentiellement sensible à la vitesse de déplacement du récepteur. Une vitesse élevée pourra exiger une correction de phase et une mise à jour du vecteur de pondération plus rapide que la vitesse de la boucle de rétroaction actuellement prévue.

Les stations de base de systèmes cellulaires qui exploitent une diversité de polarisation utilisent par exemple un système d'antenne à polarisation croisée ("cross-polar"), c'est-à-dire composé de deux antennes placées au même endroit et agencées à 90° l'une de l'autre (l'une est par exemple sensible à la polarisation verticale, et l'autre sensible à la polarisation horizontale). Le signal transmis est reçu par l'intermédiaire d'un système d'antenne à diversité de polarisation dans deux branches du récepteur. Des techniques de combinaison permettent alors de tirer parti de l'indépendance des comportements sur le trajet de propagation de signaux à polarisations orthogonales. Plus spécifiquement, le gain de diversité de polarisation résulte de la rotation de polarisation lors des réflexions aléatoires de l'onde électromagnétique transmise sur des obstacles. De manière classique, on admet que les signaux reçus en diversité de polarisation doivent être faiblement corrélés pour que la combinaison fournisse un gain qui justifie la mise en oeuvre de cette technique. Lee et Yeh ("Polarization diversity system for mobile radio", IEEE Trans. Com., vol. COM-20, n°5, pp. 912-922, 1972) ont considéré qu'une diversité efficace peut être atteinte avec un coefficient de corrélation en dessous de 0.7.

La présente invention se rapporte notamment à un schéma de diversité duale de polarisation en émission. Dans un tel schéma, l'émission radio est répartie sur deux unités agencées pour émettre chacune un signal dans une polarisation prédéterminée. Il peut par exemple être mis en oeuvre dans une station de base pourvue d'un système d'antenne à polarisation croisée, et de deux unités d'émission radio, l'une étant prévue pour émettre en polarisation linéaire verticale, et l'autre en polarisation linéaire horizontale.

De telles stations de base sont décrites par exemple dans US-A-6 411 824 et WO01/54230.

La demande WO01/54230 décrit en particulier un système permettant de diminuer les effets des évanouissements rapides ("fast fading") observés sur un canal de communication avec un mobile. Selon la méthode décrite, une unité de transmission (d'une station de base ou d'un mobile) balaye des états prédéterminés de polarisation d'émission. La sélection d'un état optimal s'effectue selon un procédé en boucle ouverte ou en boucle fermée. Un tel procédé nécessite un rythme de mise à jour de l'optimum de polarisation au sens de la minimisation des effets du fading correspondant à la rapidité d'évolution de ce phénomène. Dans l'exemple décrit, l'adaptation est ainsi effectuée à un rythme de l'ordre d'une trame d'une durée de 10 ms. Une telle rapidité est peu compatible avec un procédé en boucle fermée, le rythme de la boucle de rétroaction imposant une charge excessive sur l'interface air compte tenu des avantages procurés par le procédé.

La demande de brevet WO 01/86823 décrit un procédé d'émission d'un signal radio d'une station de base vers un mobile selon un schéma de diversité de polarisation.L'état de polarisation d'émission de la station de base vers le mobile tend à reproduire l'état de polarisation d'un signal émis par le mobile vers la station de base et est analysé dans la station de base.

Un but de la présente invention est de proposer un autre mode de diversité de polarisation, qui procure un gain de réception appréciable sans chercher à suivre les évanouissements rapides du canal, ce qui imposerait une charge de signalisation difficilement acceptable.

L'invention propose ainsi un procédé d'émission d'un signal radio en diversité de polarisation, dans lequel on transmet plusieurs versions du signal radio ayant des polarisations différentes depuis une première station vers une seconde station. Selon l'invention, on règle de manière adaptative les puissances d'émission respectives desdites versions du signal radio en fonction de mesures effectuées par la première station sur des signaux transmis par la seconde station.

Le procédé selon l'invention reposé sur l'observation qu'en général, indépendamment du phénomène de fading rapide, une polarisation est privilégiée par rapport à l'autre à un instant donné en termes de puissance du signal utile mesurée au récepteur. Il est dès lors judicieux de privilégier l'émission sur l'une des deux polarisations.

Cependant, la polarisation privilégiée évolue au cours du temps, par exemple à cause de la mobilité de l'une ou l'autre des deux stations ou à cause de la présence de réflecteurs, d'obstacles ou d'interféreurs mobiles. Dans le cas où l'une des stations est un terminal mobile de radiocommunication cellulaire, la puissance reçue est en moyenne identique sur les deux polarisations, alors qu'à une échelle de temps sur laquelle les déplacements du terminal ne sont pas trop importants (par exemple de quelques centaines de millisecondes à quelques secondes), l'une des polarisations peut se trouver privilégiée. Avec les vitesses de déplacement usuelles, cette échelle de temps est grande par rapport à celle des variations du phénomène de fading sur le canal de propagation.

Le réglage adaptatif des puissances d'émission appliqué dans le procédé selon l'invention permet avantageusement de suivre ces évolutions pour procurer des performances de réception améliorées.

L'invention tire ainsi avantageusement parti de l'absence de contrainte de rapidité pesant sur la fréquence de la boucle de rétroaction de certains schémas en boucle fermée. Elle permet en outre de fournir une amélioration peu coûteuse en termes de complexité au schéma de diversité en boucle ouverte STTD.

Un autre aspect de la présente invention se rapporte à une station de radiocommunication à diversité de polarisation, comprenant des moyens d'émission de plusieurs versions d'un signal radio ayant des polarisations différentes vers une station de radiocommunication distante. Cette station selon l'invention comprend en outre des moyens de mesure de paramètres à partir de signaux transmis par ladite station distante et des moyens de réglage adaptatif des puissances d'émission respectives desdites versions du signal radio en fonction desdits paramètres mesurés.

L'invention propose d'autre part un terminal de radiocommunication, comprenant des moyens pour communiquer avec une infrastructure de réseau incorporant une station de radiocommunication telle que définie ci-dessus, des moyens pour recevoir et traiter des signaux émis en diversité de polarisation selon n_pol polarisations par ladite station, des moyens pour mesurer, pour certains au moins des signaux émis par ladite station de radiocommunication selon une polarisation déterminée parmi n_pol, une contribution moyenne en puissance du bruit interférant le signal utile relatif audit signal émis, et des moyens pour transmettre lesdites mesures de contribution moyenne en puissance du bruit à l'infrastructure de réseau de radiocommunication.

D'autres particularités et avantages de la présente invention apparaîtront dans la description ci-après d'exemples de réalisation non limitatifs, en référence aux dessins annexés, dans lesquels :

- la figure 1 est un schéma d'une station de radiocommunication et d'un terminal mobile illustrant un premier mode de réalisation de l'invention ;
- la figure 2 est un schéma synoptique d'une station de radiocommunication selon l'invention ;
- la figure 3 est un schéma synoptique d'un exemple de réalisation d'un émetteur-récepteur d'une station de radiocommunication selon l'invention ;
- la figure 4 est un schéma d'un réseau UMTS ;
- la figure 5 est un schéma d'une station de radiocommunication et d'un terminal mobile illustrant un second mode de réalisation de l'invention.

La figure 1 montre une station (10) d'un réseau de radiocommunication selon l'invention. La station (10) communique avec un contrôleur de réseau radio (non représenté sur la figure), et dessert une ou plusieurs cellules au moyen d'émetteurs-récepteurs respectifs (11). Une station (typiquement un terminal) mobile (13) est située sous la couverture d'un émetteur-récepteur (11). L'émetteur-récepteur (11) génère en émission des champs rayonnants avec n_pol (égal à 2 dans l'exemple de la figure 1) polarisations, à partir de n_pol antennes co-localisées. Dans l'exemple de la figure 1, il émet un signal radio à polarisation verticale sur une première antenne (14) et un signal radio à polarisation horizontale sur une seconde antenne (15). Conformément à la technique traditionnelle de diversité de polarisation, ces signaux radio à polarisations verticale et horizontale sont en fait deux versions d'un même signal. Chaque antenne (14)(15) est couplée à un amplificateur (16)(17), dont l'entrée est alimentée par l'une des deux sorties d'un coupleur de distribution (18). Selon un mode particulier de réalisation de l'invention, l'émission des deux versions de signal radio est simultanée, auquel cas les deux versions sont fournies à l'entrée du coupleur (18).

La station (13) est aussi munie de n_ant (égal à 2 dans l'exemple de la figure 1) antennes (9)(19), chacune sensibles en réception aux n_pol polarisations d'émission de la station (10) afin de fonctionner en mode de diversité de polarisation. De tels systèmes d'antenne peuvent par exemple être composés d'éléments dipôles croisés orientés selon un angle de $2\alpha$ entre eux pour permettre la réception de polarisations linéaires espacées angulairement de $2\alpha$. Dans l'exemple de la figure 1, la station (13) émet aussi des signaux selon deux polarisations espacées de $2\alpha$ (avec typiquement $2\alpha = 90°$).

On considère donc le cas d'une diversité d'émission d'ordre $n_div = n_ant \times n_pol$ (égal à 4 dans l'exemple de la figure 1), et la réception par une station (13) de radiocommunication d'une séquence de symboles (seq), émise à partir de l'émetteur-récepteur (11) fonctionnant en mode de diversité de polarisation. Chaque antenne (14)(15) rayonne donc un champ dans une polarisation $(pol_i)_{1 \le i \le n_pol}$ qui transporte la séquence émise $(seq^{pol_i})_{1 \le i \le n_pol}$. On cherche alors à déterminer un vecteur dont les composantes sont les puissances $(p_{e,BS}^{pol_i})_{1 \le i \le n_pol}$ de chaque séquence $(seq^{pol_i})_{1 \le i \le n_pol}$ transmise avec une polarisation donnée $(pol_i)_{1 \le i \le n_pol}$, et ce afin de répartir de manière optimale la puissance entre les différentes polarisations d'émission à partir de l'émetteur-récepteur (11). La somme des puissances $(p_{e,BS}^{pol_i})_{1 \le i \le n_pol}$ est majorée par la puissance totale P disponible en émission. Le vecteur optimal de répartition des puissances est estimé en minimisant une fonction de coût relative à la qualité du signal utile reçu par la station de réception (13), qui peut être la probabilité d'erreur binaire moyenne sur les bits.

La figure 2 montre l'unité d'émission d'un émetteur-récepteur (11) d'une station (10) de radiocommunication selon l'invention. Chacune des n_pol antennes (14)(15) est agencée pour rayonner un champ avec une des n_pol polarisations d'émission de la station, et est couplée avec un amplificateur (16)(17), dont l'entrée est alimentée par l'une des sorties du coupleur (18). Les données à émettre, issues d'une source (80), sont traitées en vue de l'émission par le module (28) qui effectue les traitements de modulation, et dont la sortie est reliée au coupleur (18) pour être distribuée sur les n_pol polarisations en émission. Les puissances d'émission délivrées par les amplificateurs de puissance (16) (17) sont chacune contrôlées par le module de commande (27) de manière à répartir la puissance d'émission sur les n_pol branches d'émission selon la répartition optimale estimée par le module (31). Dans la suite, on s'attachera à des exemples de réalisation de l'invention dans lesquels on mesure des paramètres d'émission et de réception de signaux en vue de déterminer la répartition optimale des puissances. Ces mesures sont fournies par le module (30) dans l'exemple de la figure 2.

Revenant à la figure 1, la portion de signal utile reçu par la station de réception (13) sur chaque antenne (9) (19) ant_j est constituée des contributions de chaque séquence transmise $(seq^{Pol_i})_{1 \le i \le n_pol}$, notée $\left(seq^{pol_i,ant_j}\right)_{1 \le i \le n_pol, 1 \le j \le n_ant}$. Chaque antenne (9)(19) est couplée à un récepteur en diversité qui effectue des traitements radio (amplification, transposition en fréquence, filtrage et numérisation) et de démodulation pour fournir des estimations des séquences transmises, qui sont combinées pour fournir un gain de diversité. La combinaison peut notamment être une combinaison optimale de type MRC, qui pondère les différentes estimations en fonction des amplitudes complexes observées pour les différents trajets. Les séquences issues de chaque récepteur peuvent à leur tour être combinées selon la méthode MRC.

L'invention sera décrite dans la suite dans le cas de liaisons entre les stations (10) et (13) utilisant une modulation différentielle par déplacement de phase (DPSK, « Differential Phase Shift Keying »). La probabilité d'erreur moyenne sur les bits après combinaison MRC s'écrit :

$$BER_{MRC} = \frac{1}{2} \cdot \prod_{k=1}^{n_div} \left( \frac{1}{1+\gamma_k} \right) \qquad (1)$$

où $(\gamma_k)_{1\leq k\leq n_div}$ désigne le rapport signal à bruit moyen mesuré sur les portions de signal utile reçues sur une antenne $(ant_j)_{1\leq j\leq n_ant}$ selon la polarisation $(pol_i)_{1\leq i\leq n_pol}$ en présence d'évanouissements rapides possédant une densité de probabilité de Rayleigh.

L'invention vise à déterminer une distribution des puissances d'émission selon chaque polarisation au niveau de la station (10). Pour une diversité duale de polarisation, les puissances reçues par la station (13) sur chaque antenne peuvent être exprimées au moyen de l'équation matricielle suivante :

$$\begin{pmatrix} p_{r,MS}^{ant_1} \\ p_{r,MS}^{ant_2} \end{pmatrix} = \begin{pmatrix} b_1 & b_2 \\ b_3 & b_4 \end{pmatrix} \begin{pmatrix} p_{e,BS}^{pol_1} \\ p_{e,BS}^{pol_2} \end{pmatrix} \qquad (2)$$

Les coefficients $(b_k)_1 \leq k \leq n_div$ sont des coefficients de transfert de puissance représentant une moyenne sur un intervalle de temps suffisamment long pour lisser les variations du canal dues au fading de Rayleigh, mais suffisamment court pour conserver une certaine différenciation des polarisations compte tenu de la mobilité de la station (13) par rapport aux antennes (14) et (15) de l'émetteur-récepteur (11). Cet intervalle de temps sera typiquement de l'ordre de 10 ms à quelques secondes. Les quantités $\left(p_r^{ant_j}\right)_{1\leq j\leq n_ant}$ et $\left(p_e^{pol_i}\right)_{1\leq i\leq n_pol}$ représentent donc des contributions moyennes en puissance sur chaque polarisation pol_i en émission, ou antenne en réception ant_j, respectivement, mesurées sur un intervalle de temps de l'ordre de 10 ms à quelques secondes. Dans le sens inverse, si l'on suppose que chacune des antennes (14)(15) est aussi sensible en réception aux n_pol polarisations, les puissances reçues par la station de base (11) sur chaque polarisation peuvent être exprimées au moyen de l'équation matricielle suivante

$$\begin{pmatrix} p_{r,BS}^{ant_1} \\ p_{r,BS}^{ant_2} \end{pmatrix} = \begin{pmatrix} b'_1 & b'_2 \\ b'_3 & b'_4 \end{pmatrix} \begin{pmatrix} p_{e,MS}^{pol_1} \\ p_{e,MS}^{pol_2} \end{pmatrix} \qquad (3)$$

En travaillant avec des quantités moyennes mesurées sur un tel intervalle de temps, le théorème de réciprocité permet de considérer que les matrices de transfert de puissance dans le sens descendant et dans le sens montant sont quasi-identiques, de sorte que l'on peut faire l'approximation : $b'_k = b_k$, $\forall$ $1\leq k \leq n_div$. Cet intervalle de moyennage permet en effet d'ignorer pour le besoin des calculs les phénomènes d'évanouissement rapides, les coefficients de la matrice de transfert de puissance reflétant les variations lentes de l'atténuation observées sur le canal de propagation.

Dans le cas présent de réalisation de l'invention, les quantités $(\gamma_k)_{1\leq k\leq n_div}$ s'écrivent $\gamma_k = \frac{puis_r^{(pol_i,ant_j)}}{N_r^{(pol_i,ant_j)}}$ pour $1 \leq i \leq n_pol$, $1 \leq j \leq n_ant$ où $puis_r^{(pol_i,ant_j)}$ désigne la contribution en puissance moyenne reçue sur l'antenne ant_j du signal utile émis avec la polarisation pol_i, et $N_r^{pol_i,ant_j}$ désigne la contribution en puissance moyenne reçue sur l'antenne ant_j du bruit correspondant. La matrice de transfert de puissance permet ensuite d'écrire $\gamma_k = \frac{b_k \cdot p_e^{pol_i}}{N_r^{pol_i,ant_j}}$. La minimisation de la fonction de coût $BER_{MRC}$ (1) conduit alors à la recherche des racines positives d'un polynôme en $p_e^{pol_1}$ de degré 3, qui permet d'obtenir l'expression des puissances optimales pour chaque polarisation émise, par exemple dans le sens descendant. Ces valeurs optimales de puissances sont transmises au module (27) de commande, afin d'être prises en compte dans la commande des moyens (16)(17) d'amplification de l'émetteur-récepteur (11).

La complexité de la détermination du vecteur optimal de distribution des puissances peut être avantageusement amoindrie en tirant parti du caractère associatif des opérations de combinaison optimale MRC. La minimisation de la fonction de coût en sortie des modules de combinaison optimale conduit à travailler sur un ordre de diversité n_div/n_pol. Dans ce cas de figure, les quantités $(\gamma_k)_{1\leq k\leq n_div}$ deviennent $(\gamma_{ant_j})_{1\leq j\leq n_ant}$ et s'écrivent $\gamma_{ant_j} = \frac{puis_r^{ant_j}}{N_r^{ant_j}}$ pour 1 ≤ i ≤ n_ ant où $puis_r^{ant_j}$ désigne la contribution en puissance moyenne reçue du signal utile sur l'antenne ant_j, et $N_r^{ant_j}$ désigne la contribution en puissance moyenne reçue du bruit correspondant.

L'équation matricielle (2) conduit à :

$$\gamma_{ant_1} = \frac{p_e^{pol_1} \times b_1 + \left(P - p_e^{pol_1}\right) \times b_2}{N_r^{ant_1}} \quad (4)$$

et

$$\gamma_{ant_2} = \frac{p_e^{pol_2} \times b_3 + \left(P - p_e^{pol_2}\right) \times b_4}{N_r^{ant_2}} \quad (5)$$

Il en découle, par dérivation de la fonction de coût $BER_{MRC}$ (1), l'expression des puissances optimales pour chaque polarisation émise, par exemple dans le sens descendant :

$$\hat{p}_{e,BS}^{pol_1} = \frac{\left(N_{r,MS}^{ant_1} + b_2 \cdot P\right) \times \left(b_4 - b_3\right) + \left(N_{r,MS}^{ant_2} + b_4 \cdot P\right) \times \left(b_2 - b_1\right)}{2 \cdot \left(b_1 - b_2\right) \cdot \left(b_3 - b_4\right)} \quad (6)$$

et

$$\hat{p}_{e,BS}^{pol_2} = P - \hat{p}_{e,BS}^{pol_1} \quad (7)$$

Ce mode de réalisation de l'invention est décrit ci-après dans un exemple d'application à un réseau de radiocommunication utilisant la technique d'accès partagé CDMA ("Code Division Multiple Access"). La figure 3 illustre la partie réception d'un émetteur-récepteur (11) d'une station (10) de radiocommunication opérant en mode de diversité de polarisation selon l'invention. La station dispose de n_pol = 2 antennes de réception, chacune des antennes (14) (15) étant sensible à chaque polarisation $(pol_i)_{1\leq i\leq n_pol}$. Un étage radio (21), disposé en aval de chaque antenne (14) (15), assure les traitements d'amplification, de transposition en fréquence, de filtrage et de numérisation pour former un signal en bande de base à partir du signal radio capté par l'antenne (14)(15).

Dans un système CDMA à étalement de spectre, les séquences de symboles transmis (seq), généralement binaires (± 1) ou quaternaires (± 1 ± j), sont multipliées par des codes d'étalement composés d'échantillons, appelés "chips", dont la cadence est supérieure à celle des symboles, dans un rapport appelé facteur d'étalement, noté SF ("Spreading Factor"). Des codes d'étalement orthogonaux ou quasi-orthogonaux sont alloués à différents canaux partageant la même fréquence porteuse, afin de permettre à chaque récepteur de détecter la séquence de symboles qui lui est destinée, en multipliant le signal reçu par le code d'étalement correspondant.

Chaque antenne (14)(15) est couplée en réception à un récepteur traditionnel qui effectue une démodulation cohérente fondée sur une approximation de la réponse impulsionnelle du canal de propagation radio. Pour estimer une réponse impulsionnelle, un module de sondage (22) comporte, de façon classique, un filtre adapté au code d'étalement du canal ou à la séquence de symboles pilotes transmise considérée. Pendant la réception d'un symbole pilote, connu a priori de la station de base (11 ), la sortie de ce filtre adapté est multipliée par le complexe conjugué de ce symbole pilote, ce qui produit une observation de la réponse impulsionnelle. L'estimation est obtenue en moyennant ces observations sur quelques dizaines de symboles pilotes.

La station (10) reçoit des séquences pilotes $\left(seq_pil_{ant_j}^{pol_i}\right)_{1 \le i \le n_pol, 1 \le j \le n_ant}$ correspondant à des séquences émises $\left(seq_pil_{ant_j}\right)_{1 \le j \le n_ant}$ par la station (13), constituées de séquences de symboles pilotes $\left(seq_pil_symb_{ant_j}\right)_{1 \le j \le n_ant}$ multipliées par le code d'étalement du canal. Ceci permet à chaque module (22) d'estimer séparément chaque vecteur de réponse impulsionnelle $(h_k)_{0 \le k \le n_div}$dont les composantes caractérisent le canal de propagation d'un signal émis sur une parmi les n_ant d'émission de la station (13). Ce traitement est effectué pour chacune des n_pol branches du récepteur en diversité de la station (10), de sorte que dans l'exemple de réalisation de l'invention, les n_pol modules (22) réalisent n_div estimations de réponse impulsionnelle $(h_{ant_j}^{pol_i})_{1 \le i \le n_pol, 1 \le j \le n_ant}$. A partir de ces n_div réponses impulsionnelles estimées, un module (23) effectue une démodulation cohérente et un décodage des n_pol signaux reçus sur chaque antenne. La démodulation par exemple être effectuée au moyen d'un récepteur de type RAKE. Les estimations des symboles transmis ainsi obtenues sont ensuite combinées au sein du module (24) pour obtenir un gain en diversité. Le module (24) produit n_pol séquences de symboles estimés, chacune correspondant à la combinaison des signaux reçus selon l'une parmi les n_pol polarisations d'émission de la station (10).

Le module (25) détermine des coefficients de transfert de puissance $(b_k)_{1 \le k \le n_div}$, à partir de l'estimation de canal ou des signaux démodulés (estimation des bits) dont il mesure la contribution moyenne en puissance $\left(p_r^{pol_i}\right)_{1 \le i \le n_pol}$, et des contributions moyennes en puissance de la station (13) $\left(p_e^{pol_i}\right)_{1 \le i \le n_pol}$. Le module (26) détermine ensuite un vecteur optimal de puissances $(\hat{p}_{e,BS}^{pol_i})_{1 \le i \le n_pol}$ dont il transmet les composantes correspondant à chaque polarisation au module de commande (27) qui commande en émission les amplificateurs de puissance (16)(17).

Ces traitements supposent que la station (11) dispose des contributions moyennes en puissance de la station (13) $\left(p_e^{pol_i}\right)_{1 \le i \le n_pol}$ et des contributions moyennes en puissance du bruit en réception de la station (13) $(N_{r,MS}^{pol_i})_{1 \le i \le n_pol}$. Ces données peuvent être fournies à la station (11) au moyen d'une boucle de rétroaction dont un exemple est fourni ci-après dans le cadre des réseaux de troisième génération de type UMTS, dont la figure 4 montre l'architecture.

Les commutateurs du service mobile 50, appartenant à un coeur de réseau (CN, « Core Network »), sont reliés d'une part à un ou plusieurs réseaux fixes 51 et d'autre part, au moyen d'une interface dite *lu,* à des équipements de contrôle 52, ou RNC (« Radio Network Controller »). Chaque RNC 52 est relié à une ou plusieurs stations de base 53 au moyen d'une interface dite *lub.* Les stations de base 53, réparties sur le territoire de couverture du réseau, sont capables de communiquer par radio avec les terminaux mobiles 54, 54a, 54b appelés UE (« User Equipment »). Les stations de base 53, aussi appelées « node B », peuvent desservir chacune une ou plusieurs cellules au moyen d'émetteurs-récepteurs respectifs 55. Certains RNC 52 peuvent en outre communiquer entre eux au moyen d'une interface dite *lur.* Les RNC et les stations de base forment un réseau d'accès appelé UTRAN (« UMTS Terrestrial Radio Access Network »).

Les réseaux UMTS utilisent une technique à large bande d'accès multiple avec répartition par codes (W-CDMA, « Wideband CDMA »). La cadence chip est de 3,84 Mchip/s dans le cas de l'UMTS. Les codes d'étalement distinguent différents canaux physiques qui sont superposés sur la même ressource de transmission constituée par une fréquence porteuse. Pour l'UMTS en mode FDD (« Frequency Division Duplex ») sur la liaison descendante, un code de brouillage (« scrambling code ») est alloué à chaque émetteur-récepteur correspondant à une cellule desservie par une station de base, et différents canaux physiques dans cette cellule sont distingués par des codes de canal (« channelization codes ») mutuellement orthogonaux. L'émetteur-récepteur peut aussi utiliser plusieurs codes de brouillage mutuellement orthogonaux, l'un d'entre eux étant un code de brouillage primaire. Sur la liaison montante, l'émetteur-récepteur utilise le code de brouillage pour séparer les terminaux mobiles émetteurs, et éventuellement le code de canal pour séparer les canaux physiques issus d'un même terminal. Pour chaque canal physique, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le canal.

Dans un mode préféré de réalisation de l'invention, les signaux émis par le terminal sur chacune des polarisations le sont avec la même puissance. La puissance d'émission d'un terminal mobile peut être connue de la station de base par l'intermédiaire des procédures de mesures demandées par le RNC aux UE, pour être ensuite transmise aux stations de base sur l'interface lub.

Les procédures de mesure sont notamment décrites dans la section 8.4 de la spécification technique 3G TS 25.331, "Radio Ressource Control (RRC) Protocol Specification", version 3.9.0 publiée en décembre 2001 par le 3GPP, et dans la spécification technique 3G TS 25.215, "Physical Layer; Measurements (FDD)", version 3.9.0 publiée en décembre 2001 par le 3GPP. Les mesures souhaitées par le RNC sont demandées aux UE dans des messages « MEASUREMENT CONTROL », dans lesquels sont également indiqués les modes de compte rendu, par exemple avec une périodicité spécifiée ou en réponse à certains événements. Les mesures spécifiées par le RNC sont alors effectuées par l'UE qui les remonte sur la connexion RRC dans des messages « MEASUREMENT REPORT» (voir sections 10.2.15 et 10.2.17 de la spécification technique 3G TS 25.331 ). Ces messages « MEASUREMENT CONTROL » et « MEASUREMENT REPORT » sont relayés de façon transparente par les émetteurs-récepteurs 55 des stations de base. Les mesures prises en considération par le RNC pour contrôler les liens radio comprennent des mesures de puissance (type de mesure "UE transmitted power" décrite au paragraphe 5.1.7 de la spécification technique 25.215, version 3.9.0) effectuées sur les signaux ou canaux pilotes, obtenues par un module de mesure situé dans l'UE. Les mesures obtenues par ce module de mesure sont transmises au RNC par l'intermédiaire d'un protocole de contrôle des ressources radio (RRC), appartenant à la couche 3 du modèle ISO, décrit dans la spécification technique 3G TS 25.331. Ces mesures de puissance peuvent ensuite être retransmises à la station de base, par exemple au moyen du protocole applicatif de commande des émetteurs-récepteurs, appelé NBAP ("Node B Application Protocol", voir spécification technique 3G TS 25.433, version 3.9.0 publiée en mars 2002 par le 3GPP).

Dans la suite, on considère que les contributions moyennes en puissance du bruit en réception de la station (13) $\left(N_{r,MS}^{pol_i}\right)_{1\leq i\leq n_pol}$ sont identiques sur les différentes polarisations, et notées $N_{r,MS}$. Cette contribution peut être exprimée comme suit : $N_{r,MS} = RSSI_{MS} - \frac{p_{e,BS}}{\text{"pathloss"}}$ où la quantité RSSI (« Received Signal Strength Indicator ») désigne la puissance reçue dans la bande passante des signaux autour d'une porteuse UMTS. Cette puissance peut être mesurée par le récepteur radio de la station (13). Dans un système UMTS, l'UE peut aussi calculer l'atténuation du signal ("pathloss") sur le canal de propagation depuis chaque node B d'un ensemble surveillé pour la mise en oeuvre du mode de macrodiversité. La norme prévoit que le RNC puisse demander à l'UE qu'il lui rende compte de ce paramètre d'atténuation (3G TS 25.331, sections 10.3.7.38 et 14.1.1) et de cette puissance reçue (3G TS 25.331, sections 10.3.7.15 et 10.3.7.21). De même que précédemment, ces mesures peuvent ensuite être retransmises à la station de base, par exemple au moyen du protocole NBAP (voir spécification technique 3G TS 25.433 précitée).

L'orthogonalité des séquences pilotes $\left(seq_pil_{ant_j}\right)_{1\leq j\leq n_ant}$ peut être assurée selon deux modes de fonctionnement détaillés ci-après.

Le premier mode de fonctionnement est caractérisé par la détermination du ou des canaux physiques à utiliser pour la communication entre la station (13) et l'émetteur-récepteur (11), ainsi que de leur format, un canal de communication ayant des caractéristiques propres selon son format. Les différents formats existants sont rassemblés dans le tableau 11 de la section 5.3.2 de la spécification technique 3G TS 25.211, "Physical channels and mapping of transport channels onto physical channels (FDD)", version 3.9.0 publiée en décembre 2001 par le 3GPP. Une des caractéristiques importantes d'un canal de communication est son facteur d'étalement SF. Plus le SF d'un canal est élevé, plus le débit qu'il offre sera faible. Mais parallèlement, plus le SF d'un canal est élevé, plus la durée d'un symbole est grande, permettant ainsi une meilleure robustesse aux interférences. Dans le système UMTS illustré à la figure 4, le RNC 52 peut décider de modifier les canaux de communication courants pour les remplacer par un ou plusieurs canaux de communication de SF différent. Un traitement similaire peut d'ailleurs être effectué, non pas en cours de communication, mais à l'initialisation de celle-ci, lors de l'allocation de ressources radio.

Pour illustrer ce principe général, considérons un canal de communication de SF 8 utilisé à un moment donné entre un terminal mobile 54 et un émetteur récepteur fixe 55. Celui-ci est par exemple un canal de format n° 15 selon la codification de la spécification technique 3G TS 25.211. Le RNC peut choisir d'utiliser, en remplacement de ce canal de communication, deux autres canaux de SF 16, par exemple de format n° 14. Le terminal mobile 54 fonctionne alors en mode de transmission multicode. La communication est alors également répartie entre les deux canaux. Le débit résultant est légèrement plus faible avec les deux canaux de SF 16, ce qui n'empêchera toutefois pas d'offrir le service requis.

Lorsque le mobile transmet en multicode des signaux à diversité de polarisation, l'allocation en transmission de chaque canal de communication peut être effectuée de manière à transmettre avec un code de canal donné sur une polarisation. Dans l'exemple précédent, chaque canal de SF16 peut être transmis sur une antenne du terminal mobile, chaque antenne générant des signaux radio électriques de polarisation $(pol_i)_{1\le i\le n_pol}$. Cela permet d'associer un code de canal avec une polarisation, ce qui assure l'orthogonalité des séquences $\left(seq_pil_{ant_j}\right)_{1\le j\le n_ant}$ émises sur chaque antenne.

Dans le système UMTS, le fonctionnement en mode multicode d'un mobile est contrôlé par le RNC correspondant. La transmission par le RNC des canaux à utiliser par le terminal mobile se fait selon le protocole RRC, tel que présenté dans la spécification technique 3G TS 25.331 précitée, grâce à un message de commande d'initialisation ou de reconfiguration de canaux : "Radio bearer setup", "Radio bearer reconfiguration" ou "Physical channel reconfiguration". Chacun de ces messages contient un élément d'information nommé "Downlink information for each radio link" (voir paragraphe 10.3.6.27 de la 3G TS 25.331 ). Ce message contient lui-même un élément d'information nommé "Downlink DPCH info for each RL" (voir paragraphe 10.3.6.21 de la 3G TS 25.331). Ce dernier message contient un certain nombre d'informations permettant de caractériser les canaux à utiliser. Parmi ces informations, on trouve les codes de canal descendant, les facteurs d'étalement et les codes de brouillage associés. A la réception de ce message, le terminal mobile est capable d'utiliser le ou les canaux identifiés et transmis par le RNC.

Dans un autre mode de fonctionnement, l'orthogonalité des séquences pilotes émises $\left(seq_pil_{ant_j}\right)_{1\le j\le n_ant}$ est assurée par l'orthogonalité des séquences de symboles pilotes considérées $\left(seq_pil_symb_{ant_j}\right)_{1\le j\le n_ant}$.

Dans un second mode de réalisation illustré par la figure 5, la station mobile (70) est équipée de n_ant = 1 antenne dipolaire (73). Compte tenu des rotations de polarité intervenant le long des trajets de propagation entre l'émetteur et le récepteur, cette antenne (73) est sensible en réception à chacune des n_pol polarisations d'émission de la station fixe (71). L'ordre de diversité est alors égal à n_pol (égal à 2 dans l'exemple de la figure 5).

Dans le cas de liaisons entre les stations (70) et (71) utilisant une modulation DPSK, la probabilité d'erreur moyenne sur les bits après combinaison MRC s'écrit :

$$BER_{MRC} = \frac{1}{2} \cdot \prod_{i=1}^{n_pol} \left( \frac{1}{1+\gamma_i} \right) \qquad (8)$$

où $(\gamma_i)_{1\le i\le n_pol}$ désigne le rapport signal à bruit moyen mesuré sur les portions de signal utile reçues par la station (70) selon la polarisation $(pol_i)_{1\le i\le n_pol}$ en présence d'évanouissements rapides possédant une densité de probabilité de Rayleigh.

On cherche à minimiser $BER_{MRC}$ (8) sous la contrainte :

$$\sum_{i=1}^{n_pol} p_{e,BS}^{pol_i} = P \qquad (9)$$

Les quantités $(\gamma_i)_{1\leq i\leq n_pol}$ s'écrivent : $\gamma_i = \frac{puis_r^{pol_i}}{N_r^{pol_i}}$ pour $1\leq i \leq n_pol$ où $puis_r^{pol_i}$ désigne la contribution en puissance moyenne reçue par la station (70) du signal utile émis avec la polarisation pol_i, et $N_r^{pol_i}$ désigne la contribution en puissance moyenne reçue du bruit. En notant, $(b_i)_{1\leq i\leq n_pol}$ le coefficient d'atténuation subi par le signal utile émis avec la polarisation pol_i, il vient : $\gamma_i = \frac{b_i \cdot p_e^{pol_i}}{N_r^{pol_i}}$. Des techniques classiques d'optimisation sous contrainte (comme par exemple les coefficients multiplicateurs de Lagrange) conduisent à l'optimum :

$$\hat{p}_{e,BS}^{pol_i} = \frac{P}{n_pol} + \frac{1}{n_pol}\sum_{l=1}^{n_pol}\frac{N_r^{pol_l}}{b_l} - \frac{N_r^{pol_i}}{b_i} \qquad (10)$$

En supposant que la contribution en puissance moyenne reçue du bruit est identique sur chaque polarisation, et est notée Nr, on obtient :

$$\hat{p}_{e,BS}^{pol_i} = \frac{P}{n_pol} + \frac{N_r}{n_pol}\sum_{l=1}^{n_pol}\frac{1}{b_l} - \frac{N_r}{b_i} \qquad (11)$$

soit pour une diversité de polarisation d'ordre 2, comme illustré sur la figure 5 :

$$\hat{p}_{e,BS}^{pol_1} = \frac{P}{2} + \frac{N_r}{2}\left(\frac{1}{b_2} - \frac{1}{b_1}\right) \qquad (12)$$

et

$$\hat{p}_{e,BS}^{pol_2} = \frac{P}{2} + \frac{N_r}{2}\left(\frac{1}{b_1} - \frac{1}{b_2}\right) \qquad (13)$$

De même que précédemment, l'application du théorème de réciprocité permet. d'obtenir les coefficients $(b_i)_{1\leq i\leq n_pol}$ à partir d'une mesure des atténuations dans le sens montant, de la station (70) vers la station (71 ). Le couplage de chaque antenne (74)(75) de l'émetteur-récepteur (72) à un récepteur traditionnel permet de mettre en oeuvre l'exemple précédent de procédé d'obtention des coefficients $(b_i)_{1\leq i\leq n_pol}$.

La puissance d'émission de la station (71 ) sur chaque antenne (74)(75) correspondant à une polarisation donnée est donc ajustée de manière à privilégier le meilleur trajet du signal émis. Ce procédé peut avantageusement être combiné avec d'autres schémas de diversité d'émission, prévus par exemple pour des réseaux de type GSM ("Global System for Mobile Telecommunications"), ou pour des réseaux de type UMTS, comme le schéma STTD évoqué plus haut. Dans ce cas de figure, les deux versions du signal radio sont émises selon le schéma d'émission STTD. Leur émission n'est de ce fait pas simultanée.

## Revendications

1. Procédé d'émission d'un signal radio en diversité de polarisation, dans lequel on transmet plusieurs versions du signal radio ayant des polarisations différentes depuis une première station (10) vers une seconde station (13) et dans lequel on règle de manière adaptative les puissances d'émission respectives desdites versions du signal radio en fonction de mesures effectuées par la première station sur des signaux transmis par la seconde station, **caractérisé en ce qu'** on estime une répartition optimale de puissance d'émission du signal radio entre les différentes polarisations (pol_1, pol_n_pol) au sens de la minimisation d'une fonction de coût relative à la qualité du signal reçu par la seconde station, et on répartit la puissance d'émission entre lesdites versions du signal radio conformément à la répartition estimée.

2. Procédé selon la revendication 1, dans lequel on transmet lesdites versions du signal radio simultanément.

3. Procédé selon la revendication 1, dans lequel la fonction de coût à minimiser mesure une probabilité d'erreur en réception.

4. Procédé selon la revendication 1, dans lequel on mesure des paramètres d'émission de signaux transmis par la seconde station vers la première station, et des paramètres de réception par la seconde station desdites versions du signal radio émis en diversité de polarisation par la première station, et on transmet lesdits paramètres mesurés à la première station pour l'estimation de la répartition optimale de puissance d'émission.

5. Procédé selon la revendication 4, ladite seconde station étant agencée pour émettre en diversité de polarisation, dans lequel :

   - on mesure, pour chaque polarisation en émission, une contribution moyenne en puissance de certains au moins des signaux émis par la seconde station ;
   - on mesure, pour certains au moins des signaux émis par la première station selon une polarisation déterminée vers la seconde station, une contribution moyenne en puissance du bruit en réception interférant le signal utile relatif audit signal émis ;
   - on évalue, pour chaque polarisation en émission par la première station, des coefficients de transfert de puissance sur un canal de propagation radio de certains au moins des signaux émis par la seconde station.

6. Procédé selon la revendication 4, ladite seconde station étant agencée pour émettre en diversité de polarisation, dans lequel la contribution moyenne en puissance des signaux émis par la seconde station est sensiblement identique sur chaque polarisation, et dans lequel :

   - on mesure une contribution moyenne en puissance de certains au moins des signaux émis par la seconde station ;
   - on mesure, pour certains au moins des signaux émis par la première station selon une polarisation déterminée vers la seconde station, une contribution moyenne en puissance du bruit en réception interférant le signal utile relatif audit signal émis ;
   - on évalue, pour chaque polarisation en émission par la première station, des coefficients de transfert de puissance sur un canal de propagation radio de certains au moins des signaux émis par la seconde station.

7. Procédé selon la revendication 5 ou 6, dans lequel les mesures de contribution moyenne en puissance du bruit et de contribution moyenne en puissance d'émission sont effectuées dans la seconde station, et transmises à la première station en vue de l'estimation de la répartition optimale de la puissance d'émission.

8. Station de radiocommunication à diversité de polarisation, comprenant des moyens d'émission (16-18,28) de plusieurs versions d'un signal radio ayant des polarisations différentes vers une station de radiocommunication distante (70)(13) et comprenant en outre des moyens (24,25) de mesure de paramètres à partir de signaux transmis par ladite station distante qui comprennent une contribution moyenne en puissance du bruit et des moyens (26-27,31) de réglage adaptatif des puissances d'émission respectives desdites versions du signal radio en fonction desdits paramètres mesurés **caractérisée en ce que** les moyens (26-27,31 ) de réglage adaptatif des puissances d'émission comprennent des moyens (26, 31 ) pour estimer une répartition optimale de la puissance d'émission des signaux émis avec une polarisation déterminée au sens de la minimisation d'une fonction de coût relative à la qualité du signal reçu par la station distante, et des moyens (27) de commande des moyens d'émission (16-18,28) pour répartir la puissance d'émission suivant la répartition estimée.

9. Station de radiocommunication selon la revendication 8, dans laquelle les moyens d'émission (16-18,28) sont couplés à n_pol antennes (14)(15), n_pol étant supérieur ou égal à deux, et agencés de manière à émettre à partir de chaque antenne (14)(15) un signal radio selon une parmi n_pol polarisations.

10. Station de radiocommunication selon la revendication 8, dans laquelle les moyens (26,31 ) pour estimer la répartition optimale de puissance d'émission comprennent des moyens de minimisation d'une probabilité d'erreur en réception par la station distante.

11. Station de radiocommunication selon la revendication 8 ou 10, comprenant en outre des moyens (30) d'obtention de paramètres d'émission de signaux par la station distante et de réception de signaux émis vers la station distante, coopérant avec les moyens (26, 31) pour estimer la répartition optimale de puissance d'émission.

12. Station de radiocommunication selon la revendication 9, comprenant en outre des moyens (21-23) de réception couplés aux n_pol antennes (14)(15) sensibles en réception aux n_pol polarisations, respectivement, et dans laquelle les moyens (26, 31 ) pour estimer la répartition optimale de puissance d'émission coopèrent avec des moyens (30) d'obtention de paramètres d'émission de signaux par la station distante et de réception de signaux émis vers la station distante et des moyens (22-25) d'obtention de paramètres de réception de signaux émis par la station distante.

13. Station de radiocommunication selon la revendication 12, dans laquelle les moyens (22-25) d'obtention de paramètres de réception de signaux émis par la station distante comprennent des moyens d'obtention, pour chacune des n_pol polarisations, d'une contribution moyenne en puissance de certains au moins des signaux émis par la station distante, et des moyens d'estimation de coefficients de transfert de puissance de signaux émis par la station distante selon chacune des n_pol polarisations, et reçus sur chacune des n_pol antennes (14)(15).

14. Station de radiocommunication selon la revendication 12 ou 13, dans laquelle les moyens (22-25) d'obtention de paramètres de réception de signaux émis par la station distante comprennent des moyens d'obtention d'une contribution moyenne en puissance de certains au moins des signaux émis par la station distante, et des moyens de détermination de coefficients de transfert de puissance de signaux émis par la station distante selon chacune des n_pol polarisations, et reçus sur chacune des n_pol antennes (14)(15).

15. Station de radiocommunication selon l'une quelconque des revendications 12 à 14, dans laquelle les moyens (22-25) d'obtention de paramètres de réception de signaux émis par la station distante comprennent des moyens (22)(23) pour estimer des symboles émis par la station distante selon chacune des n_pol polarisations, et reçus sur chacune des n_pol antennes (14)(15), et des moyens (24) de combinaison des symboles estimés.

16. Station de radiocommunication selon la revendication 11 ou 12, dans laquelle les moyens (30) d'obtention de paramètres d'émission de signaux par la station distante et de réception de signaux émis vers la station distante comprennent des moyens d'obtention, pour l'un au moins des signaux émis vers la station distante selon une polarisation déterminée parmi n_pol, d'une mesure d'une contribution moyenne en puissance du bruit interférant le signal utile relatif audit signal émis.

17. Station de radiocommunication selon la revendication 11, dans laquelle les moyens (30) d'obtention de paramètres d'émission de signaux par la station distante et de réception de signaux émis vers la station distante comprennent des moyens de mesure, pour chacune des n_pol polarisations en émission, d'une contribution moyenne en puissance de certains au moins des signaux émis par la station distante.

18. Station de radiocommunication selon la revendication 9, dans laquelle n_pol = 2.

19. Système comprenant un terminal de radiocommunication et une station de radiocommunication selon l'une quelconque des revendications 8 à 18, ledit terminal comprenant des moyens pour communiquer avec une infrastructure de réseau incorporant ladite station de radiocommunication, des moyens pour recevoir et traiter des signaux émis en diversité de polarisation selon n_pol polarisations par ladite station, des moyens pour mesurer, pour certains au moins des signaux émis par ladite station de radiocommunication selon une polarisation déterminée parmi n_pol, une contribution moyenne en puissance du bruit interférant le signal utile relatif audit signal émis, et des moyens pour transmettre lesdites mesures de contribution moyenne en puissance du bruit à l'infrastructure de réseau de radiocommunication.

20. Système selon la revendication 19, dans lequel le terminal de radiocommunication comprend des moyens pour recevoir et traiter des signaux émis en diversité de polarisation selon n_pol polarisations sur n_ant antennes, n_ant étant supérieur ou égal à 2, des moyens pour évaluer, pour chacune des n_pol polarisations, des coefficients de transfert de puissance sur un canal de propagation radio de certains au moins des signaux émis par ladite station de radiocommunication, et des moyens pour transmettre les coefficients évalués à l'infrastructure de réseau de radiocommunication.

**21.** Système selon la revendication 19, dans lequel le terminal de radiocommunication comprend en outre des moyens pour émettre des signaux radio selon lesdites n_pol polarisations à partir de n_ant antennes d'émission, des moyens pour mesurer, pour chacune des n_pol polarisations en émission, une contribution moyenne en puissance de certains au moins des signaux émis par lesdits moyens d'émission, et des moyens pour transmettre lesdites mesures à l'infrastructure de réseau de radiocommunication.

**22.** Système selon la revendication 19, dans lequel le terminal de radiocommunication comprend en outre des moyens pour émettre avec une contribution moyenne en puissance sensiblement identique des signaux radio selon lesdites n_pol polarisations à partir de n_ant antennes d'émission, des moyens pour mesurer une contribution moyenne en puissance de certains au moins des signaux émis par lesdits moyens d'émission, et des moyens pour transmettre lesdites mesures à l'infrastructure de réseau de radiocommunication.

**23.** Système selon l'une quelconque des revendications 19 à 22, dans lequel n_pol = 2.

**24.** Système selon l'une quelconque des revendications 20 à 23, dans lequel n_ant = 2.

## Claims

**1.** Method for transmission of a radio signal with polarization diversity, wherein

- a plurality of versions of the radio signal having different polarizations are transmitted from a first station (10) to a second station (13) and wherein
- the respective transmitted powers of said versions of the radio signal are adaptively controlled in function of measurements, performed by the first station on signals, transmitted by the second station,

**characterized in that**

- an optimal distribution of transmitted radio signal power between the different polarizations (pol_1, pol_n_pol) is estimated in order to minimize a cost function relative to the quality of the signal received by the second station, and
- the transmitted power is distributed between said radio signal versions in accordance with the estimated distribution.

**2.** Method according to claim 1, wherein said versions of the radio signal are transmitted simultaneously.

**3.** Method according to claim 1, wherein the cost function to be minimized measures an error probability in the reception.

**4.** Method according to claim 1, wherein transmission parameters of the signals transmitted by the second station to the first station are measured, and parameters of the reception by the second station of said versions of the radio signal, transmitted in polarization diversity by the first station, and wherein said parameters, measured at the first station , are transmitted in order to estimate the optimal distribution of the transmitted power.

**5.** Method according to claim 4, whereby the second station is arranged to transmit in polarization diversity, wherein:

- an average power contribution by at least some of the signals transmitted by the second station is measured for each transmitted polarization;
- for at least some of the signals transmitted by the first station to the second station according to a determined polarization, an average contribution of the received noise power, interfering the useful signal relative to said transmitted signal, is measured;
- for each polarization transmitted by the first station, coefficients of power transfer on a radio propagation channel of at least some of the signals, transmitted by the second station, are evaluated.

6. Method according to claim 4, whereby the second station is arranged to transmit in polarization diversity, wherein the average power contribution of the signals transmitted by the second station is approximately identical on each polarization and wherein:

- an average power contribution by at least some of the signals transmitted by the second station is measured;
- for at least some of the signals transmitted by the first station to the second station according to a determined polarization, an average contribution of the received noise power, interfering the useful signal relative to said transmitted signal, is measured;
- for each polarization transmitted by the first station, coefficients of power transfer on a radio propagation channel of at least some of the signals, transmitted by the second station, are evaluated.

7. Method according to claim 5 or 6, wherein the measurements of average noise power contribution and of average contribution to the transmitted power are performed in the second station, and transmitted to the first station in view of the estimation of the optimal distribution of the transmitted power.

8. Radiocommunication station having polarization diversity, comprising means for transmitting (16-18, 28) a plurality of versions of a radio signal having different polarizations to a distant radiocommunication station (70)(13) and further comprising means (24,25) for measuring parameters from signals, transmitted by said distant station and having an average noise power contribution and means (26-27, 31) for adaptively controlling the respective transmitted power of said radio signal versions in function of said measured parameters,
**characterized in that**
the means (26-27, 31) for adaptively controlling the transmitted power comprise means (26,31) for estimating an optimal distribution of the transmitted power of the signals transmitted with a determined polarization in order to minimize a cost function relative to the quality of the signal, received by the distant station, and means (27) for controlling transmitting means (16- 18, 28) in order to distribute the transmitted power according to an estimated distribution.

9. Radiocommunication station according to claim 8, wherein the transmission means (16-18, 28) are coupled to n_pol antennas (14) (15), n_pol being greater than or equal to two, and arranged to transmit from each antenna (14) (15) a radio signal according to one among n_pol polarizations.

10. Radiocommunication station according to claim 8, wherein the means for estimating the optimal transmission power distribution comprises means for minimizing a probability of error in reception by the distant station.

11. Radiocommunication station according to claim 8 or 10, comprising further means (30) for obtaining parameters of signals transmission by the distant station and of reception of signals transmitted to the distant station, cooperating with the means (26, 31) for estimating an optimal distribution of the transmitted power.

12. Radiocommunication station according to claim 9, comprising further means (21-23) for receiving coupled to the n_pol antennas (14) (15) having receiving sensitivity to the n_pol polarizations respectively, and wherein the means (26, 31) for estimating an optimal distribution of the transmitted power cooperate with the means (30) for obtaining parameters of signals transmission by the distant station and of reception of signals transmitted to the distant station and means (22-25) for obtaining receiving parameters of signals transmitted by the distant station.

13. Radiocommunication station according to claim 12, wherein the means (22-25) for obtaining receiving parameters of signals transmitted by the distant station comprises means for obtaining, for each of the n_pol polarizations, an average power contribution by at least some of the signals transmitted by the distant station, and means for estimating coefficients of power transfer by signals transmitted by the distant station according to each of the n_pol polarizations, and received by each of the n_pol antennas (14) (15).

14. Radiocommnnication station according to claim 12 or 13, wherein the means (22-25) for obtaining receiving parameters of signals transmitted by the distant station comprises means for obtaining an average power contribution by at least some of the signals transmitted by the distant station, and means for determining coefficients of power transfer of signals transmitted by the distant station according to each of the n_pol polarizations , and received by each of the n_pol antennas (14) (15).

15. Radiocommunication station according to any of the claims 12 to 14, wherein the means (22-25) for obtaining receiving parameters of signals transmitted by the distant station comprises means (22) (23) for estimating symbols transmitted by the distant station according to each of the n_pol polarizations, and received by each of the n_pol antennas (14) (15), and means (24) for combining estimated symbols.

16. Radiocommunication station according to claim 11 or 12, wherein the means (30) for obtaining parameters of signals transmission by the distant station and of reception of signals transmitted to the distant station comprises means for obtaining, for at least one of the signals transmitted to the distant station according to a determined polarization among n_pol, of a measure of an average power contribution of the noise interfering the useful signal relative to said transmitted signal.

17. Radiocommunication station according to claim 11, wherein the means (30) for obtaining parameters of signals transmission by the distant station and of reception of signals transmitted to the distant station comprise means for measuring, for each transmitted n_pol polarizations, an average power contribution by at least some of the signals transmitted by the distant station.

18. Radiocommunication station according to claim 9, wherein n_pol = 2.

19. System comprising a radiocommunication terminal and a radiocommunication station according to anyone of the claims 8 to 18, said terminal comprising means for communicating with a network infrastructure incorporating said radiocommunication station, means for receiving and processing the signals, transmitted in polarization diversity according to n_pol polarizations by said station, means for measuring, for at least some of the signals transmitted by said radiocommunication station according to a determined polarization among n_pol, an average noise power contribution interfering the useful signal relative to said transmitted signal and means for transmitting said measurements of average noise power contribution to the radiocommunication network infrastructure.

20. System according to claim 19, wherein the radiocommunication terminal comprises means for receiving and processing signals, transmitted in polarization diversity according to n_pol polarizations on n_ant antennas, n_ant being greater than or equal to two, means for evaluating, for each of the n_pol polarizations, coefficients of power transfer on a radio propagation channel, of at least some of the signals transmitted by said radiocommunication station and means for transmitting the evaluated coefficients to the radiocommunication network infrastructure.

21. System according to claim 19, wherein the radiocommunication terminal comprises further means for transmitting radio signals according to said n_pol polarizations from n_ant transmission antennas, means for measuring, for each of the n_pol transmitted polarizations, an average power contribution of at least some of the signals transmitted by said transmitting means, and means for transmitting said measurements to the radiocommunication network infrastructure.

22. System according to claim 19, wherein the radiocommunication terminal comprises further means for transmitting with an approximately identical average power contribution radio signals according to said n_pol polarizations from n_ant transmission antennas, means for measuring an average power contribution of at least some of the signals transmitted by said transmitting means, and means for transmitting said measurements to the radiocommunication network infrastructure.

23. System according to any of claims 19 to 22, wherein n_pol = 2.

24. System according to any of claims 20 to 23, wherein n_ant = 2.

## Patentansprüche

1. Verfahren zum Senden eines Funksignals mit Polarisationsdiversity, wobei mehrere Versionen des Funksignals mit verschiedenen Polarisationen von einer ersten Station (10) zu einer zweiten Station (13) gesendet werden und wobei die jeweiligen Sendeleistungen dieser Funksignalversionen in Abhängigkeit von Messungen, die von der ersten Station an Signalen durchgeführt werden, die durch die zweite Station gesendet werden, adaptiv geregelt werden, **dadurch gekennzeichnet, dass** eine Optimalverteilung der Sendeleistung des Funksignals zwischen den verschiedenen Polarisationen (pol_1, pol_n_pol) im Sinne der Minimierung einer Kostenfunktion bezüglich der Qualität des durch die zweite Station empfangenen Signals geschätzt wird und die Sendeleistung der geschätzten Verteilung entsprechend zwischen diesen Versionen des Funksignals verteilt wird.

2. Verfahren nach Anspruch 1, wobei diese Versionen des Funksignals simultan gesendet werden.

3. Verfahren nach Anspruch 1, wobei die zu minimierende Kostenfunktion eine Empfangsfehlerwahrscheinlichkeit misst.

4. Verfahren nach Anspruch 1, wobei Sendeparameter der Signale, die von der zweiten Station zur ersten Station gesendet werden, und Empfangsparameter, durch die zweite Station, dieser Versionen des Funksignals, die von der ersten Station mit Polarisationsdiversity gesendet werden Signals, gemessen werden und diese gemessenen Parameter zur Schätzung der Optimalverteilung der Sendeleistung zur ersten Station gesendet werden.

5. Verfahren nach Anspruch 4, wobei die zweite Station angeordnet ist, um mit Polarisationsdiversity zu senden, wobei:

- für jede Sendepolarisation ein mittlerer Leistungsbeitrag mindestens bestimmter Signale, die von der zweiten Station gesendet werden, gemessen wird;
- mindestens für bestimmte Signale, die von der ersten Station mit einer bestimmten Polarisation zur zweiten Station gesendet werden, ein mittlerer Empfangsrauschleistungsbeitrag gemessen wird, der das Nutzsignal dieses gesendeten Signals stört;
- für jede Sendepolarisation der ersten Station Leistungsübertragungskoeffizienten auf einem Funkkanal mindestens bestimmter Signale, die von der zweiten Station gesendet werden, bestimmt werden.

6. Verfahren nach Anspruch 4, wobei die zweite Station angeordnet ist, um mit Polarisationsdiversity zu senden, wobei der mittlere Leistungsbeitrag der Signale, die von der zweiten Station gesendet werden, für jede Polarisation im Wesentlichen gleich ist, und wobei:

- ein mittlerer Leistungsbeitrag mindestens bestimmter Signale, die von der zweiten Station gesendet werden, gemessen wird;
- mindestens für bestimmt Signale, die von der ersten Station mit einer bestimmten Polarisation zur zweiten Station gesendet werden, ein mittlerer Empfangsrauschieistungsbeitrag gemessen wird, der das Nutzsignal dieses gesendeten Signals stört;
- für jede Sendepolarisation der ersten Station Leistungsübertragungskoeffizienten auf einem Funkkanal mindestens bestimmter Signale, die von der zweiten Station gesendet werden, geschätzt werden.

7. Verfahren nach Anspruch 5 oder 6, wobei die Messungen des mittleren Rauschleistungsbeitrags und des mittleren Sendeleistungsbeitrags in der zweiten Station durchgeführt werden und zur ersten Station übertragen werden, um die Optimalverteilurg der Sendeleistung zu schätzen.

8. Funkstation mit Polarisationsdiversity, umfassend Mittel zum Senden (16-18,28) mehrerer Versionen eines Funksignals mit verschiedenen Polarisationen zu einer Fernfunkstation (70)(13), und außerdem umfassend Mittel (24,25) zum Messen von Parametern ausgehend von Signalen, die von der Fernstation gesendet werden, die einen mittleren Rauschleistungsbeitrag einschließen, und Mittel (26-27,31) zur adaptiven Regelung der jeweiligen Sendeleistungen der Versionen des Funksignals in Abhängigkeit von den gemessenen Parametern, **dadurch gekennzeichnet, dass** die Mittel (26-27,31) zur adaptiven Regelung der Sendeleistungen Mittel (26,31) umfassen, um eine Optimalverteilung der Sendeleistung der mit einer bestimmten Polarisation gesendeten Signale im Sinne der Minimierung einer Kostenfunktion bezüglich der Qualität des durch die Fernstation empfangenen Signals zu schätzen, und Mittel (27) zur Steuerung der Sendemittel (16-18,28), um die Sendeleistung der geschätzten Verteilung entsprechend zu verteilen.

9. Funkstation nach Anspruch 8, wobei die Sendemittel (16-18,28) mit n_pol Antennen (14)(15) gekoppelt sind, wobei n_pol größer oder gleich zwei ist, und derart angeordnet sind, dass sie von jeder Antenne (14)(15) ein Funksignal mit einer von n_pol Polarisationen senden.

10. Funkstation nach Anspruch 8, wobei die Mittel (26,31) zum Schätzen der Optimalverteilung der Senderleistung Mittel zur Minimierung einer Empfangsfehlerwahrscheinlichkeit durch die Fernstation umfassen.

11. Funkstation nach Anspruch 8 oder 10, umfassend außerdem Mittel (30) zum Erhalt von Sendeparametern von Signalen durch die Fernstation und von Empfangsparametern von Signalen, die zur Fernstation gesendet werden, die mit den Mitteln (26,31) zum Schätzen der Optimalverteilung der Sendeleistung zusammenwirken.

**12.** Funkstation nach Anspruch 9, außerdem umfassend Empfangsmittel (21-23), die jeweils mit den n_pol Antennen (14)(15) gekoppelt sind und die n_pol Polarisationen empfangen können, und wobei die Mittel (26,31) zum Schätzen der Optimalverteilung der Sendeleistung mit Mitteln (30) zum Erhalt von Sendeparametern von Signalen durch die Fernstation und von Empfangsparametern von Signalen, die zur Fernstation gesendet werden, und Mitteln (22-25) zum Erhalt von Empfangsparametern von Signalen, die von der Fernstation gesendet werden, zusammenwirken.

**13.** Funkstation nach Anspruch 12, wobei die Mittel (22-25) zum Erhalt von Empfangsparametern von Signalen, die von der Fernstation gesendet werden, Mittel umfassen, um für jede der n_pcl Polarisationen einen mittleren Leistungsbeitrag mindestens bestimmter Signale, die von der Fernstation gesendet werden, zu erhalten, und Mittel zum Schützen von Leistungsübertragungskoeffizienten von Signalen, die von der Fernstation mit jeder der n_pol Polarisationen gesendet werden und an jeder der n_pol Antennen (14)(15) empfangen werden.

**14.** Funkstation nach Anspruch 12 oder 13, wobei die Mittel (22-25) zum Erhält von Empfangsparametern von Signalen, die von der Fernstation gesendet werden, Mittel umfassen, um einen mittleren Leistungsbeitrag mindestens bestimmter Signale zu erhalten, die von der Fernstation gesendet werden, und Mittel zum Bestimmten von Leistungsübertragungskoerfizienten von Signalen, die von der Fernstation mit jeder der n_pol Polarisationen gesendet werden und an jeder der n_pol Antennen (14)(15) empfangen werden.

**15.** Funkstation nach einem der Ansprüche 12 bis 14, wobei die Mittel (22-25) zum Erhalt von Empfangsparametern von Signalen, die von der Fernstation gesendet werden, Mittel (22)(23) umfassen, um Symbole zu schätzen, die von der Fernstation mit jeder der n_pol Polarisationen gesendet werden und an jeder der n_pol Antennen (14)(15) empfangen werden, und Mittel (24) zur Kombination der geschätzten Symbole.

**16.** Funkstation nach Anspruch 11 oder 12, wobei die Mittel (30) zum Erhalt von Sendeparametern von Signalen durch die Fernstation und von Empfangsparmmetern von Signalen, die zur Fernstation gesendet werden, Mittel umfassen, um für mindestens eines der Signale, die mit einer bestimmten von n-pol Polarisationen zur Fernstation gesendet werden, eine Messung eines mittleren Rauschleistungsbeitrags durchzuführen, der das Nutzsignal dieses gesendeten Signals stört.

**17.** Funkstation nach Anspruch 11, wobei die Mittel (30) zum Erhalt von Sendeparametern von Signalen durch die Fernstation und von Empfangsparametern von Signalen, die zur Fernstation gesendet werden, Mittel umfassen, um für jede der n_pol Sendepolarisationen einen mittleren Leistungsbeitrag mindestens bestimmter Signale, die von der Fernstation gesendet werden, zu messen.

**18.** Funkstation nach Anspruch 9, wobei n_pol = 2.

**19.** System, umfassend ein Funkterminal und eine Funkstation nach einem der Ansprüche 8 bis 18, wobei dieses Terminal Mittel umfasst, um mit einer Netzinfrastruktur zu kommunizieren, in der diese Funkstation integriert ist, Mittel zum Empfangen und Verarbeiten von Signalen, die von dieser Station mit Polarisationsdiversity in n_pol Polarisationen gesendet werden, Mittel, um mindestens für bestimmte Signale, die von der Station mit einer bestimmten von n-pol Polarisationen gesendet werden, einen mittleren Rauschleistungsbeitrag zu messen, der das Nutzsignal des gesendeten Signals stört, und Mittel, um diese Messungen des mittleren Rauschleistungsbeitrags zur Funknetzinfrastruktur zu übertragen.

**20.** System nach Anspruch 19, wobei das Funkterminal Mittel zum Empfangen und Verarbeiten von Signalen umfasst, die mit Polarisationsdiversity in n_pol Polarisationen von n-ant Antennen aus gesendet werden, wobei n_ant größer oder gleich 2 ist, Mittel, um für jede der n_pol Polarisationen Leistungsübertragungskoeffizienten mindestens bestimmter Signale auf einem Funkkanal, die von dieser Funkstation gesendet werden, zu schätzen, und Mittel, um die geschätzten Leistungsübertragungskoeffizienten zur Funknetzinfrastruktur zu übertragen.

**21.** System nach Anspruch 19, wobei das Funkterminal außerdem Mittel umfasst, um Funksignale mit diesen n_pol Polarisationen von n_ant Sendeantennen aus zu senden, Mittel, um für jede de n_pol Sendepolarisationen einen mittleren Leistungsbeitrag mindestens bestimmter Signale, die von den Sendemitteln gesendet werden, zu messen, und Mittel, um diese Messungen zur Funknetzinfrastruktur zu übertragen.

**22.** System nach Anspruch 19, wobei das Funkterminal außerdem Mittel umfasst, um Funksignale mit diesen n_pol Polarisationen mit einem im Wesentlichen gleichen mittleren Leistungsbeitrag von n_ant Sendeantennen aus zu senden, Mittel, um einen mittleren Leistungsbeitrag mindestens bestimmter Signale, die von den Sendemitteln gesendet werden, zu messen, und Mittel, um diese Messungen zur Funknetzinfrastruktur zu übertragen.

**23.** System nach einem der Ansprüche 19 bis 22, wobei n_pol = 2.

**24.** System nach einem der Ansprüche 20 bis 23, wobei n_ant = 2.

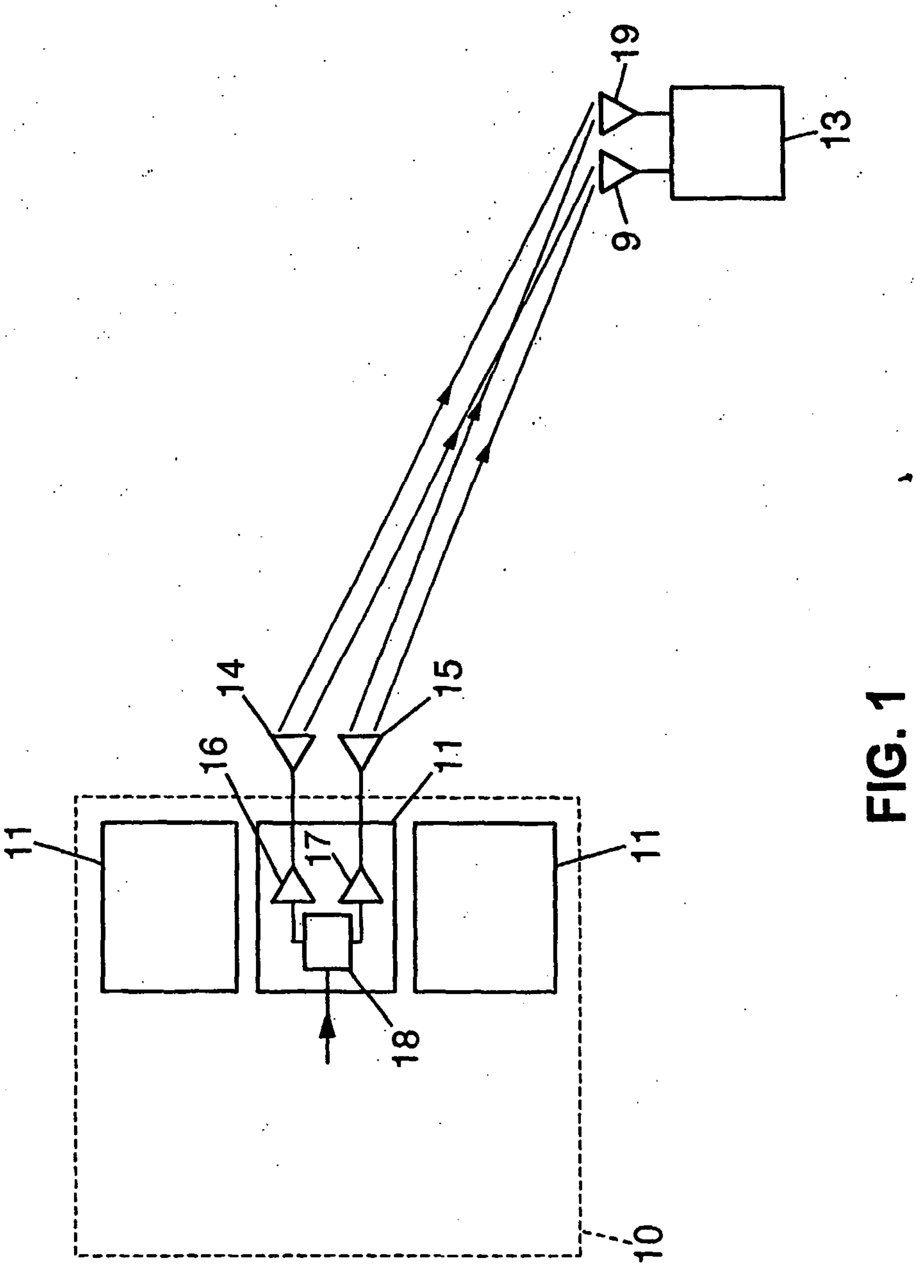


FIG. 1

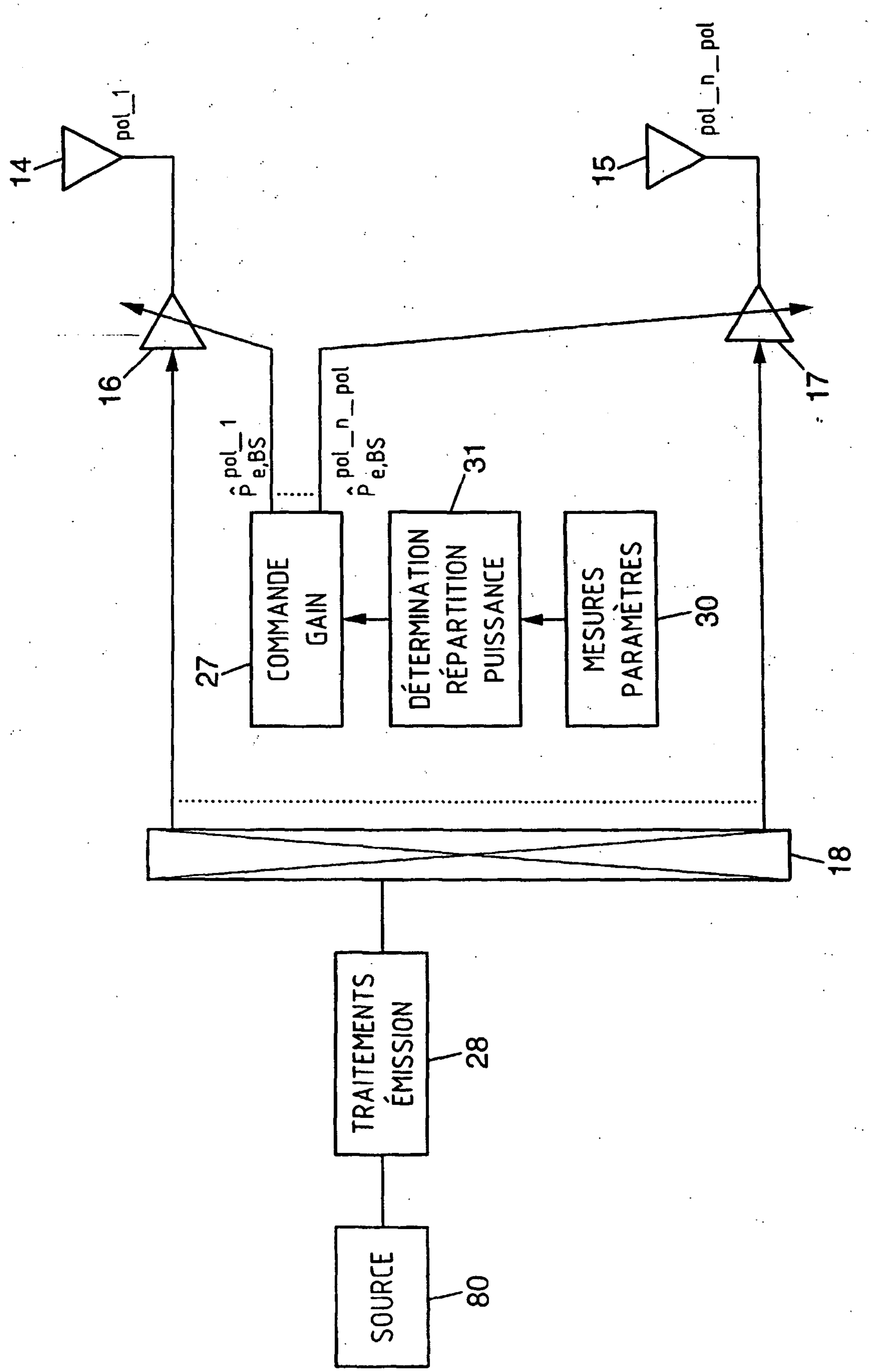
14
pol_1
15
pol_n_pol
16
17
$\hat{P}_{e,BS}^{pol_1}$
$\hat{P}_{e,BS}^{pol_n_pol}$
31
COMMANDE GAIN
27
DÉTERMINATION RÉPARTITION PUISSANCE
MESURES PARAMÈTRES
30
18
TRAITEMENTS ÉMISSION
28
SOURCE
80

FIG. 2

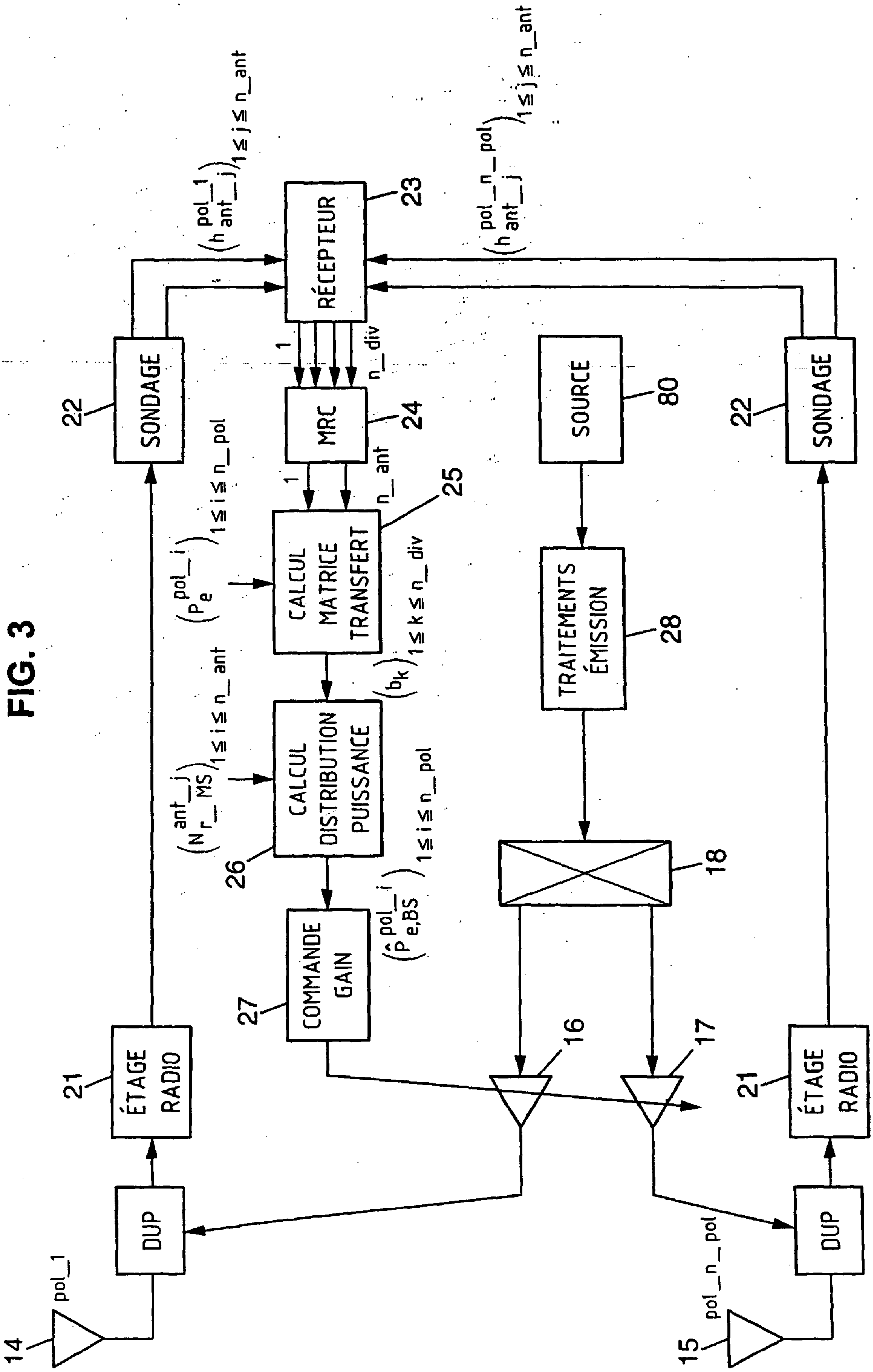
SONDAGE
RÉCEPTEUR
MRC
CALCUL MATRICE TRANSFERT
CALCUL DISTRIBUTION PUISSANCE
COMMANDE GAIN
SOURCE
TRAITEMENTS ÉMISSION
ÉTAGE RADIO
DUP
pol_1
pol_n_pol
n_div
n_ant
14
15
16
17
18
21
22
23
24
25
26
27
28
80

FIG. 3

FIG. 4

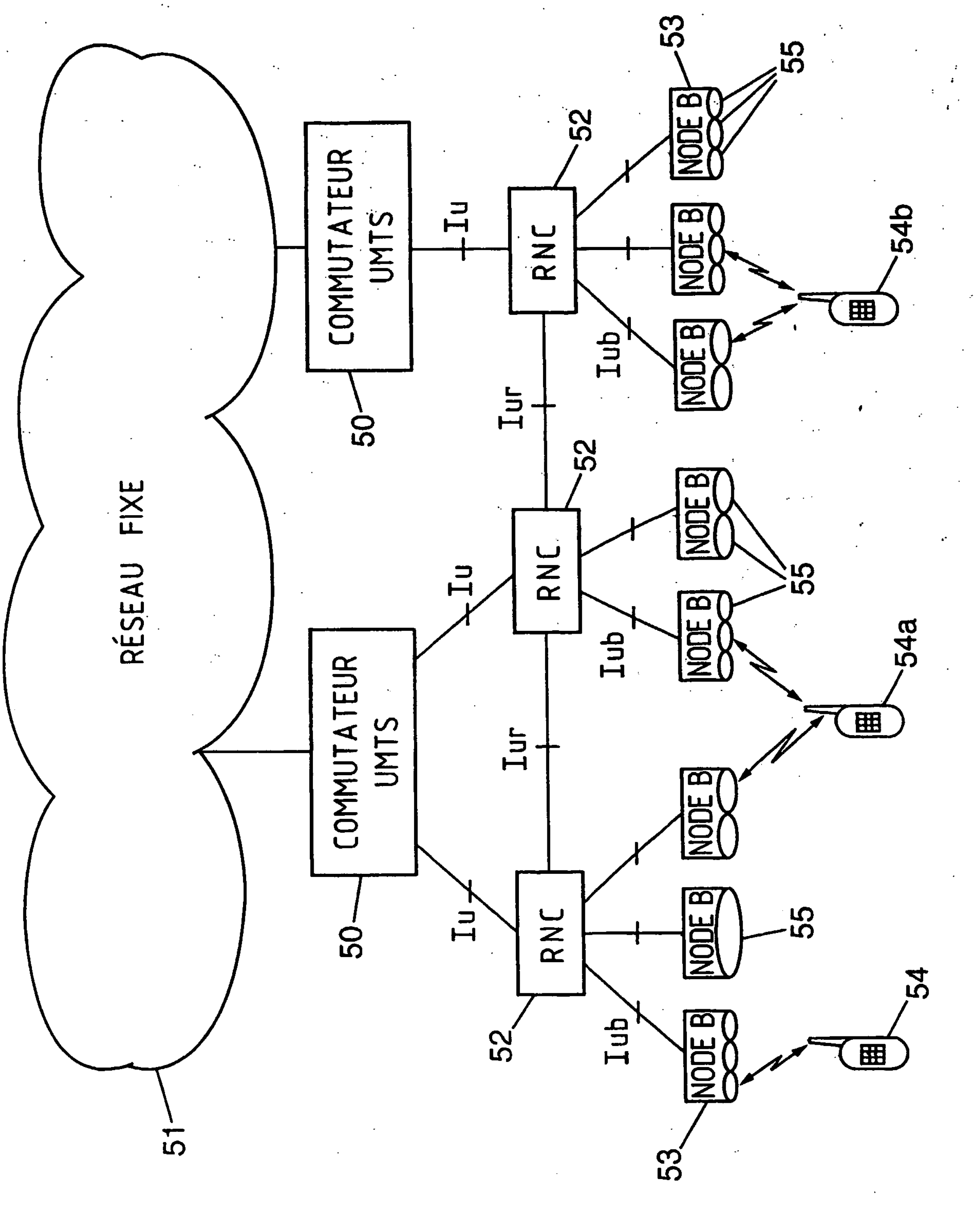
RÉSEAU FIXE
COMMUTATEUR UMTS
COMMUTATEUR UMTS
RNC
RNC
RNC
NODE B
Iu
Iur
Iub
50
51
52
53
54
54a
54b
55

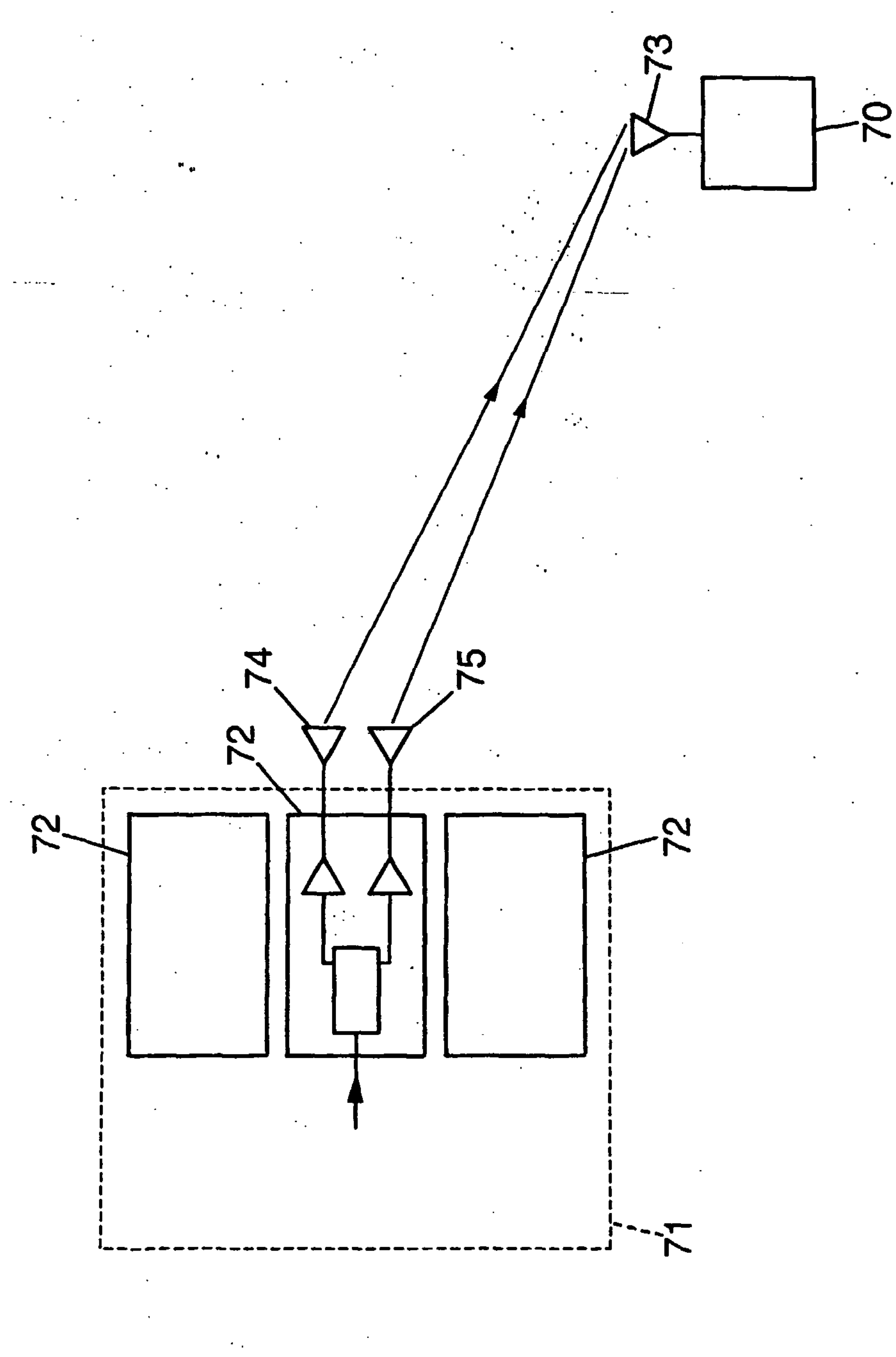


FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6411824 A
- WO 0154230 A
- WO 0186823 A


### Littérature non-brevet citée dans la description


- **Lee ; Yeh.** Polarization diversity system for mobile radio. *IEEE Trans. Com.,* 1972, vol. 20 (5), 912-922